# EUROPEAN PATENT SPECIFICATION

(11) **EP 2 996 348 B1**
(45) Date of publication and mention of the grant of the patent: **12.05.2021**
(21) Application number: 15182320.0
(22) Date of filing: 25.08.2015
(51) Int. Cl.: H04N 21/442, H04N 21/45, H04N 21/658

(54) **DETECTION OF USER INTERACTIONS**
NACHWEIS VON BENUTZERINTERAKTIONEN
DÉTECTION D'INTERACTIONS AVEC L'UTILISATEUR

(30) Priority: 26.08.2014 IT MI20141515
(43) Date of publication of application: 16.03.2016
(73) Proprietor: Sky Italia S.R.L., 20138 Milano (IT)
(72) Inventor: Gianellini, Marco, 20138 Milano (IT)
(74) Representative: Hoffmann Eitle

(56) References cited:
- EP-A1- 1 215 901
- US-A- 5 382 970
- US-A1- 2003 005 432
- US-A1- 2005 235 318
- US-A1- 2007 180 463

## Description

### FIELD OF THE INVENTION

The present invention relates to monitoring of the interface between a user and terminal for receiving signals from a communication network.

### BACKGROUND ART

One of the needs of the radio and television industry is to measure and monitor the audience, i.e. the actual listening to/viewing of broadcasts, sports events, news etc... by the radio and television listeners/viewers. In other words, to have a measurement of how many people follow a given radio or television broadcast. As technologies have evolved, the listeners/viewers has had a much vaster offering available to it than a simple selection of television programs to choose from. In particular, contents in addition to the television channel are available, e.g. interactive services, voting services, and services providing news, statistics, or weather or traffic forecasts, which are added to the normal radio and television programs. Moreover, a vast selection of on-demand services is available, that is, the user can request a channel via an interface of his receiver and receive a channel or a service of his choice. What is more, it is possible to enjoy such content also via the Internet, and not only with the typical channels broadcast over the air or via satellite.

There are prior art detection systems based, for example, on the BARB (Broadcasters' Audience Research Board) system. This technology, however, is geared more toward audiences in a traditional sense (channel tuned into) rather than the collection of data related also to the new services and how they are used. Moreover, these systems are not capable of monitoring the interaction between user and terminal in a detailed and versatile manner. An interest thus arises in collecting data about how a user interacts with his or her receiver. At the same time, given the complexity of the new systems and the variety of the services as well as the different sources the content is delivered from, there is also a need to be able to diagnose any malfunctions in the user/receiver interface system and take action if necessary, also remotely, to eliminate malfunctions. One solution for remedying these shortcomings, as initially considered by the inventors, could be to extend the functions of existing user-receiver detection systems, such as, for example, the above-mentioned BARB systems or similar systems. However, as observed by the inventors, it is desirable that the system for detecting user-receiver interactions be as little invasive as possible, i.e. that it require no or very few modifications to the central parts of existing receivers, or to their software parts, which are often highly complex and thus difficult and risky to modify.

Document US 2007/180463 A1 relates to a multimedia logging and reporting system and method for obtaining some viewing information about a multimedia presentation such as a television program. The viewing information is information relevant to identify a selected channel and the time it was selected. When a user interacts with a user interface, an input logger receives and records channel selection input received from the user interface. Channel selection commands are then transmitted to the tuner and to a log storage device that records the channel selection data received from the input logger.

### SUMMARY OF THE INVENTION

The object of the present invention is to remedy the problems tied to the known techniques, and to provide better monitoring of the interface status between the user and terminal with respect to the reception of radio and television or multimedia content.

The object of the invention is achieved by the subject-matter of the independent claims. Advantageous embodiments are defined in the dependent claims. Further examples are provided for facilitating the understanding of the invention.

A first example envisages a device for collecting user interface status information of a radio and television program receiver, wherein the radio and television program receiver comprises a user interface means, a processing means and a connection means for carrying at least one electrical signal between the user interface means and the processing means. The device further comprises a replication means configured to physically replicate said at least one electrical signal carried by the connection means and obtain at least one replicated electrical signal. Moreover, the device includes a collection means configured to collect user interface status information on the basis of the at least one replicated electrical signal.

A second example envisages a system comprising a radio and television program receiver and a device according to the first aspect.

A third example envisages a method for collecting user interface status information of a radio and television program receiver, said radio and television program receiver comprising a user interface means, a processing means and a connection means for carrying at least one electrical signal between said user interface means and said processing means. The method comprises the steps of:
- physically replicating the at least one electrical signal carried by said connection means and obtaining at least one replicated electrical signal;
- collecting user interface status information on the basis of said at least one replicated electrical signal.

### LIST OF FIGURES

Figure 1 illustrates a device for collecting status information according to the first embodiment, wherein it can be seen how the device interacts with a receiver.
Figure 2 illustrates a modification of the first embodiment.
Figure 3 illustrates a further modification of the first embodiment.
Figure 4 illustrates a method according to a second embodiment.
Figure 5 illustrates an example of an information collecting device and of a system in which it can operate.
Figure 6 illustrates an example of how the pressing of buttons can take place and how it is retrieved.
Figure 7 illustrates an example of a data packet assembled by the device on the basis of the information collected.

### DESCRIPTION

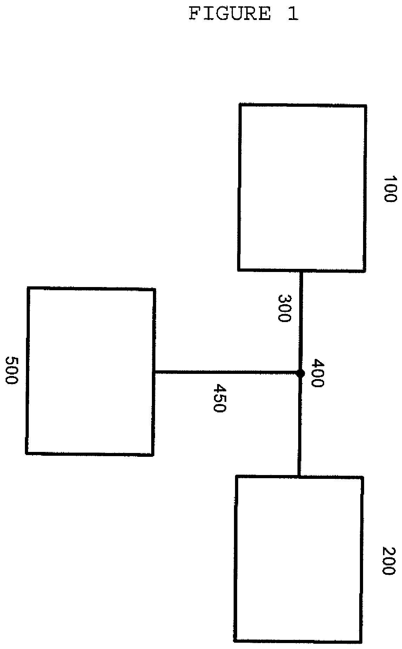

A first embodiment of a device for collecting user interface status information is described below with reference to figure 1. The user interface is the one between the user and a radio and television program receiver. A radio and television program receiver means a receiver capable of receiving radio and television or multimedia programs via a communication network, including a signal broadcasting network and/or Internet network. Examples of such a receiver are: an analogue or digital television decoder, any device capable of receiving an audio, video or audio-video stream (including, by way of example a computer, a tablet, a smartphone, or a TV with additional functions).

User interface status information means a set of one or more interactions that occur in one or both directions between the user and a radio and television or multimedia program receiver (hereinafter: receiver). An example of interface status information in the user to receiver direction is represented by the choice of a channel or function by pressing a button on the remote control, or by pressing a button on the receiver. The pressing of a button is not limited to the direct choice of a radio or television channel, but can also correspond to the selection of an option from a menu or access to an interactive function of a radio or television channel, such as, for example, an online voting function or a request for supplementary information (for example, subtitles, weather forecasts, or additional information in relation to a program). An example of interface status information from a receiver to a user is represented by the switching on (or switching off, or flashing) of a LED which represents the status of the receiver, such as, for example, the connection thereof with the radio and television program provider, the current recording status of a program, or the power supply status of the receiver.

The user interface status information of a receiver of television programs can be useful, for example, for monitoring the functioning of the receiving device and preventing or eliminating malfunctions, in order to improve the interface with the user, monitor user/receiver interaction etc. The user interface status information can go beyond the simple collection of data, which is in any case useful, as discussed, for example, for eliminating malfunctions: it can serve, for example, to reconstruct or estimate the operating status of the decoder. For example, the information on the interface status can be provided as input to a device or method for monitoring the receiver as described in application MI2014A001061 filed on 10 June 2014 in the name of Sky Italia S.r.L. A method or device as illustrated in that application is thus capable of generating or reconstructing, on the basis of user interaction, the status in which a receiver is operating in a given moment.

The receiver comprises a user interface means 100, a processing means 200 and a connection means for carrying at least one electrical signal 300 between the user interface means and the processing means. The receiver, like the user interface means 100, the processing means 200 and the connection means for carrying at least one electrical signal 300, does not strictly constitute part of the present invention, even though the present invention could be integrated therein or in parts thereof. The relationship of the receiver (and the means thereof) and the information collecting device will be clarified below. The user interface means 100 is understood as a means enabling interaction between the user and the receiver, such as, for example, a remote control and/or buttons provided on the receiver for imparting instructions to the receiver when not using the remote control. The remote control has one or more buttons which serve to impart orders and/or set functions of the receiver. For example, by means of the remote control it is possible to select a channel by pressing numerical buttons which directly select a preset channel, or it is possible to move forward or back in the sequence of preset channels, or open a preset menu presenting one or several options, a TV guide, a multiple selection of services or a list of programs; but it is also possible to set the recording of a program in the local memory of the receiver (when present), or to program functions such as, for example, sleep, selection of programs that can be watched by children (parental control), and to set passwords or adjust receiver settings. Examples of buttons situated on the receiver are the on and/or off button, the recording button, and the pause, fast forward or reverse playback buttons. The user interface means also comprises a means for providing feedback information to the user, for example: the light indicating that the receiver is on standby, the light indicating the reception of signals (for example: radio, infrared, Bluetooth, etc...) coming from the remote control, the light indicating the connection to the network, the light indicating that content is being recorded or played, etc... A processing means 200 is understood as the part of the television program receiver - normally, but not necessarily, endowed with a microprocessor - which interacts with the user interface means 100 and preferably, but not necessarily, also the part which processes the signal received (by satellite, from the network, via cable, etc...) and converts it into images projectable on a screen. A connection means for carrying at least one electrical signal 300 between the user interface means 100 and the processing means 200 is understood as any means of transferring information that is capable of placing the processing means in communication with the user interface means in such a way that the control or feedback information between the user and the processing means can be exchanged and the user can set functions of the receiver and receive feedback on these settings. In other words, the connection means 300 is the link between the user interface means 100 and the processing means 200.

It should be noted that, optionally, the connection means 300 could also be represented by a wireless data transmission system. In this case, the electrical signal between the user interface means 100 and the processing means 200 can be understood as an electromagnetic signal, and the connection means is to be understood as a transmitter and receiver of this electromagnetic signal.

Examples of a connection means for carrying an electrical signal are a printed circuit, a connection cable, or a set of connection cables or a wireless communication interface, a serial or parallel interface, etc...

The device for collecting user interface status information according to the present embodiment comprises a replication means 400 configured to replicate the electrical signal carried by the connection means and obtain at least one replicated electrical signal 450.

The replication means 400 can be, for example, a simple electrical branch of a conductor on a printed circuit (for example in the case of high impedance), or else a device capable of replicating the electrical signal, restoring the voltage and/or current levels thereof where necessary, or else an inductive or capacitive coupling without a direct electrical connection, but only a proximity connection. The replicated electrical signal 450, being a physical copy of the signal present in the connection means 300 (i.e.
a copy made on a physical level, or a level 1 according to the typical OSI classification of communication signals), can contain and typically contains all the information carried by the electrical signal exchanged between the user interface means 100 and the processing means 200.

A replication means can also be, for example, a second output of the receiver of the infrared port of the receiver, or a second output of the processing means which delivers and receives the same signals destined to the user interface. In other words, the replication means can draw the electrical signal directly from the interface means and/or from the processing means and/or independently thereof.

The device for collecting user interface status information further comprises a collection means 500 configured to collect user interface status information on the basis of at least one replicated electrical signal. Specifically, the collection means receives from the replication means a replication of the electrical signals exchanged between the user interface means and the processing means. The collection means 500 can retain the signals for a certain length of time, store them or also transmit them immediately to another device. The collection means 500 can comprise, for example, a memory, also temporary, a buffer, or else a means of connection with a remote server or any system capable of collecting the replicated electrical signal and making it available for subsequent use (the word subsequent can be understood as in time, but also as in logical sequence). Moreover, the replication means and the collection means could be a single element.

The collection means 500 can optionally comprise a computing means (for example a microprocessor) capable of interpreting the electrical signals regarding the user interface status information and of deducing, also partially, the instructions imparted by the user to the television program receiver and/or the information output to the user by the receiver.

The device for collecting user interface status information thus defined has the advantage of not requiring any software update in the receiver it is installed on. Moreover, given the simplicity of the replication means, the hardware modifications are also extremely modest and limited. This technique can be viewed as a "sniffing" of signals, i.e. an interception that does not significantly alter the original signals. This means that the device is minimally invasive and enables its simple application to a receiver without altering the functions thereof and in a wholly non-invasive manner.

Another advantage of the present invention is that it permits the collection of all the user interface status information, including, for example, the settings made via the menu, and all the information that does not lead directly to a change of channel, but is pertinent to the user interface of the receiver. The information collected will thus be very versatile, since it enables a wide range of monitorings of the user interface status. Moreover, no further programming of the receiver is necessary.

According to an optional modification of the first embodiment, the device for collecting user interface status information comprises a collection means 500 configured to obtain user interface status information by decoding at least one replicated electrical signal 450 via the above-mentioned computing means. Decoding means interpreting the information carried in the electrical signal, i.e. converting the electrical signal into the digital information transposed thereby. For example, a high or low signal corresponding to a LED is interpreted or decoded as LED on or off (or vice versa depending on the logic); the electrical signal from the infrared sensor is decoded in order to arrive at the code of the button pressed; etc...

According to another optional modification of the first embodiment, the device for collecting user interface status information comprises a collection means configurable to filter the user interface status information. The filtering action presupposes a selection of the user interface status information that the collection means memorizes or transmits to other devices. This selection can also take place on the replicated electrical signal without any decoding having taken place, for example by correlating the electrical signal with undesirable signals (noise or, for example, ones corresponding to a button it is not desired to monitor) that it is desired to filter out.

The filtering takes place on the basis of at least one parameter. The parameter can be used to determine a conditional logic on the basis of which the selection will be made. An example of such a parameter is the time of permanence for which a channel is set, when it is not desired to retain information related to a repeated switching of channels (zapping) without the user remaining on a given channel for enough time to establish that that channel was actually watched by the user. The parameter given by the time of permanence for which a channel is set is compared, in this example, with the lock-in average time of the radio or television signal (time for tuning the receiver in view of the demodulation and decoding of the channel) by the receiver. In fact, the selection of a channel could be considered non-effective when the user changes the channel again before the average channel lock-in time has elapsed. The time can also be set on a value that is considerably longer than the lock-in.

Another example of such parameter is whether or not an item of information contained in the electrical signal coincides (or a level of confidence as to whether it coincides) with another item of information originating from the processing means 200, as will be seen below.

As illustrated further below, the parameter can also refer to an operating status of the receiver.

It should be noted that the filtering is not essential for the invention, and that there are in fact cases in which it is convenient not to filter the information. For example, one may consider the case in which the user switches from channel 7 to channel 10 using the "channel up" button, and the user repeats this operation several times a day. The device will thus be able to detect this switching. On the basis of this collected information, it is therefore possible to establish that the operations of changing the channel from 7 to 10 are not convenient, so it is conceivable to reconfigure the allocation of the channels to render them adjacent and thereby simplify the user-terminal interaction. Similarly, the monitoring of the menu of interactive applications (or the EPG) can be adapted on the basis of all the information collected. What has been said serves to demonstrate that there are cases in which it is advantageous to use filtering, and other cases in which it is advantageous not to perform filtering.

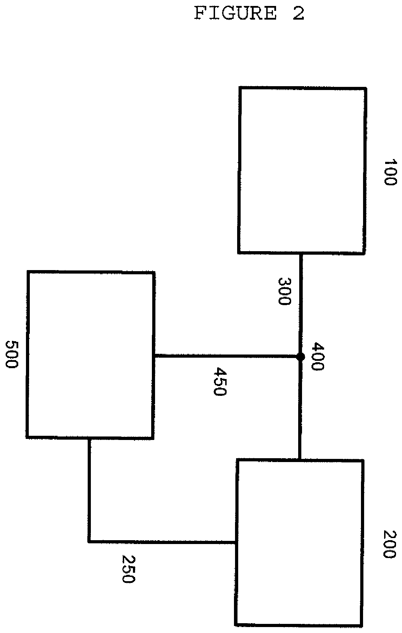

With reference to figure 2, a further optional modification of the first embodiment will now be illustrated. According to this optional modification, the collection means 500 are configured to receive from the processing means 200 an operating status 250 corresponding to an operating status of the radio and television program receiver. An operating status of the receiver represents an actual status at a given moment among all the possible statuses in which the receiver can be found to operate. The operating status depends on at least one among: the program reception status, broadcast channel status, user selection, software execution, etc.

In this optional modification of the first embodiment, a connection capable of transferring information 250 is established between the processing means 200 and the collection means 500 in order to transfer information on the operating status of the receiver. An example of this information is given by the BARB interface already known in the prior art. Other examples are an audio output branch associated with the channel tuned into by the processing means, or an electrical signal corresponding to the active recording status of the receiver (in the case in which a program is currently being recorded on the receiver or an apparatus connected to it).

According to a further optional modification of the first embodiment, if the device for collecting user interface status information is equipped with a collection means configured to filter the user interface status information on the basis of at least one parameter, this parameter is, comprises or derives from the information on the operating status 250.

For example, a user might happen to be tuned into channel 3 and want to reach channel 7 by repeatedly pressing the channel up button so quickly that none of the channels 4, 5 and 6 are tuned into. In this case, the interface information would reveal that the user selected channels 4, 5 and 6. However, the operating information of the receiver would reveal that the user only tuned into channel 7. Therefore, the collection means - by correlating the interface information (4, 5, 6 and 7) with the operating information (7) - would discard the values 4, 5, and 6 and only keep 7. In other words, the information on the operating status of the receiver can be used to correlate, filter or refine the sniffed interface information.

Another example of this filtering is when a user repeatedly presses the same button without changing the settings of the receiver, as could occur with repeated pressing of the volume down button when the volume is already set to minimum. In this case the parameter would be represented, for example, by a flag corresponding to the status "volume already at minimum", and the filter could eliminate (filter) the user interface status information related to the pressing of the volume down button after the last effective pressing.

According to a further optional modification of the first embodiment, the device for collecting user interface status information comprises a collection means 500 configured to filter the user interface status information on the basis of a parameter which comprises an indication of correspondence between an ambient audio signal and a signal of a radio or television program received by the radio and television signal receiver. The indication of correspondence can be obtained by comparing an audio sample received, for example, by the operating status 250 (for example, the modified BARB interface, or a modified interface) and an audio sample detected, for example, by an ambient microphone. A computing unit, which can be placed in the collection means 500 or else be external, compares the two samples continuously or at time intervals and generates a conditional output which constitutes the indication of correspondence between the two samples. This indication (for example true/false, or a level of confidence that there is correspondence) is a further example of the parameter used to filter the interface information.

In this manner, the collection means can verify the correspondence between the channel the receiver is tuned to and the channel that is actually being broadcast in the environment in which the receiver is located by means of an audio comparison. This can make it possible, for example, to select only the user interface status information that corresponds to a choice by the user of a program or radio and television function that is actually being viewed and/or listened to and/or enjoyed by the user.

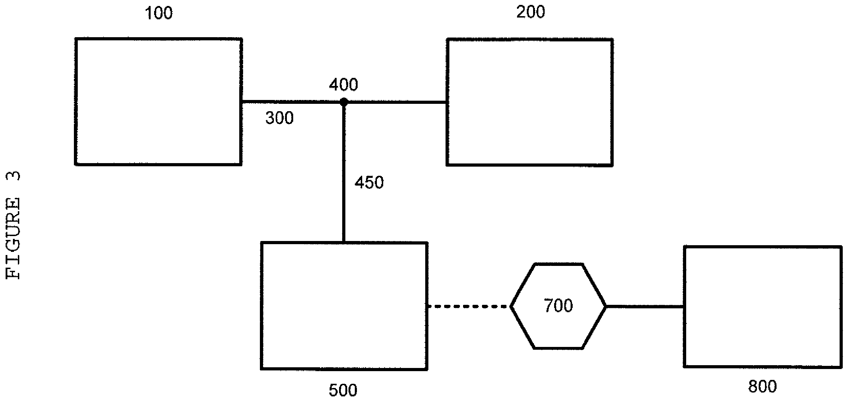

According to a further optional modification of the first embodiment, with reference to figure 3, the device for collecting user interface status information further comprises a communication means 700 for transmitting the user interface status information to a remote server 800. The communication means 700 can be a data transmission system based on GPRS (or UMTS, LTE, WLAN, WiFi, LAN, etc.), or on a computer-based transmission network such as, for example, the Internet, or a radio communication means, or another information communication system. It should be noted that the above-mentioned computing means can be located either in the collection means 500, or in the communication means 700, or also distributed in both. The user interface status information can be transmitted by the communication means 700 to a remote server 800 both in encoded form and in decoded form.

As mentioned, the collected data, i.e. the interface information, can be processed by means of a Petri Network as described in patent application MI2014A001061 filed on 10 June 2014 in the name of Sky Italia S.r.L. The Petri Network represents an example of a state machine, but the invention is not limited to that network. In fact, the state machine is a model of the operation of a receiver, a model that behaves in a predictive manner in relation to the actual operating status of the receiver. In this respect, any model is suitable for the purposes of the invention, to the extent that it is capable of simulating or modelling at least a part of the operating status of the receiver. It can also be said that the monitoring device comprises a representation of statuses or a model of statuses for monitoring purposes, wherein said representation or model of statuses for monitoring purposes replicates or describes at least a part (or all) of the actual operating statuses of the terminal. If the terminal is provided with a state machine for controlling the operation thereof, and if the model of the device is likewise implemented by a state machine, it follows that the state machine comprised in the monitoring device comprises a part or all of the statuses comprised in the state machine which is present in the receiver and controls the respective operation thereof (or of the state machine that represents or would represent the operation of the receiver). One advantage lies in the fact that, should it be desired to change the monitoring, it is not necessary to rewrite the software of the receiver, but only to update or replace the software or parts of the monitoring device. This makes the monitoring flexible and less invasive. Such processing of the data can thus produce an estimate of the operating status of the receiver. Said estimate of the operating status of the receiver corresponds to the actual operating status of the receiver, or in any case does so with a high probability if the model used for the Petri Network is faithful to the state machine of the receiver. Therefore, it is possible to determine exactly, or with high precision, any operating status of the receiver it is desired to monitor based on the interface information, without having to modify the software of the receiver for this purpose. It is thus possible to monitor, in a non-invasive and versatile manner, both the interface status and operating status of the receiver. It should be noted that the Petri Network of the cited application is not the only possible method for determining the operating status; in fact, methods of analysis on a series of interfaces are also possible. However, the analysis based on the Petri Network does have some advantages, as illustrated in the cited application. It should further be noted that the Petri Network can be run on the server 700, on the collection means 500 or distributed between the two.

According to a further modification of the present embodiment, there is provided a system comprising a radio and television program receiver and a device for collecting user interface status information corresponding to the above-described embodiment or to one of the above-described optional modifications.

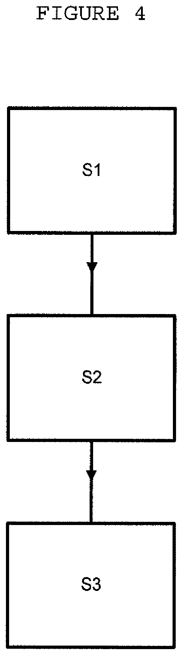

According to another embodiment and with reference to figure 4, a method for collecting user interface status information of a radio and television program receiver will now be described, which comprises a user interface means 100, a processing means 200 and a connection means for carrying at least one electrical signal 300 between the user interface means and the processing means. According to this method, in a first step S1, at least one electrical signal carried by the connection means 300 is replicated. In the second step S2, the replication of at least one electrical signal is obtained. It should be noted that the steps of replicating a signal and of obtaining at least one replicated signal can be combined in a single step. The method further comprises the step S3 of collecting user interface status information on the basis of the replicated electrical signal or replicated electrical signals. The same considerations as set forth with reference to the first embodiment are valid (also for the subsequent modifications) and reference is thus made thereto.

According to an optional modification of this second embodiment, the method comprises a step of obtaining the user interface status information by decoding said at least one replicated electrical signal.

According to a further optional modification of this second embodiment, the method comprises the step of filtering the user interface status information on the basis of at least one parameter.

According to a further optional modification of this second embodiment, the method also comprises the step of receiving from the processing means 200 an operating status corresponding to an operating status of the television program receiver.

According to a further optional modification of this second embodiment, the method also comprises the step of transmitting the user interface status information collected to a remote server 800 via a communication means 700.

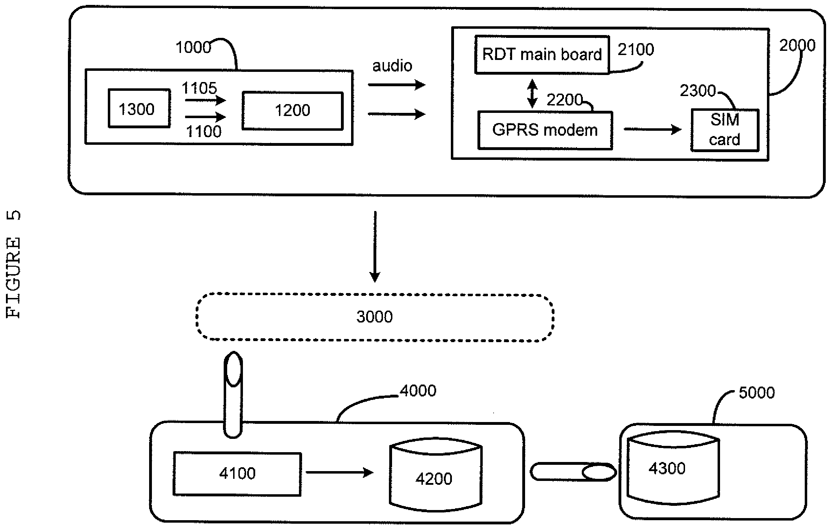

With reference to figure 5, an example will now be described to illustrate the device for collecting user interface status information of a radio and television program receiver. The element 1000, which can be seen as an example of the whole of the elements 100, 200, 300, 400 and 450 described with reference to figure 1, is also an example of the above-described receiver. In the example, the element 1300 represents the main board and the element 1200 the device for collecting user interface status information (also called a DCC, or Augmented Front Panel). Two interfaces are provided between the main board (or STB) and the device 1200: an interface 1105, such as, for example, a BARB interface, i.e. an example of the interface 250 of figure 2, and an interface which connects the device 1200 to the front panel, hence an example of the interface 300.

The number 3000 indicates a communication network, for example GSM (or GPRS, UMTS, see above) as an example of the communication means 700 of figure 3. The element 2000 comprises the element 2100, which can be an RDT (Radio Data Transmitter) main board, the element 2200, which can be a GPRS modem, and the element 2300, which can be a SIM card. The element 4000 represents a remote server, inside which there is the element 4100, which can be a data collecting server, and the element 4200, which can be a memory where the data are stored. A further element 5000 represents a possible further server with which the element 4000 communicates. Each of the elements 4000 and 5000 (or the combination thereof) is an example of the element 800 described with reference to figure 3. As may be inferred from figure 5, it is possible to detect or sniff the signals from the receiver to collect information on the interface status of the decoder. Such information can thus be monitored remotely on the server 4000 or 5000 in order to determine, for example, malfunctions or use in general. The server 4000 and/or 5000 can moreover determine or estimate the operating status, for example by means of a Petri Network as discussed above.

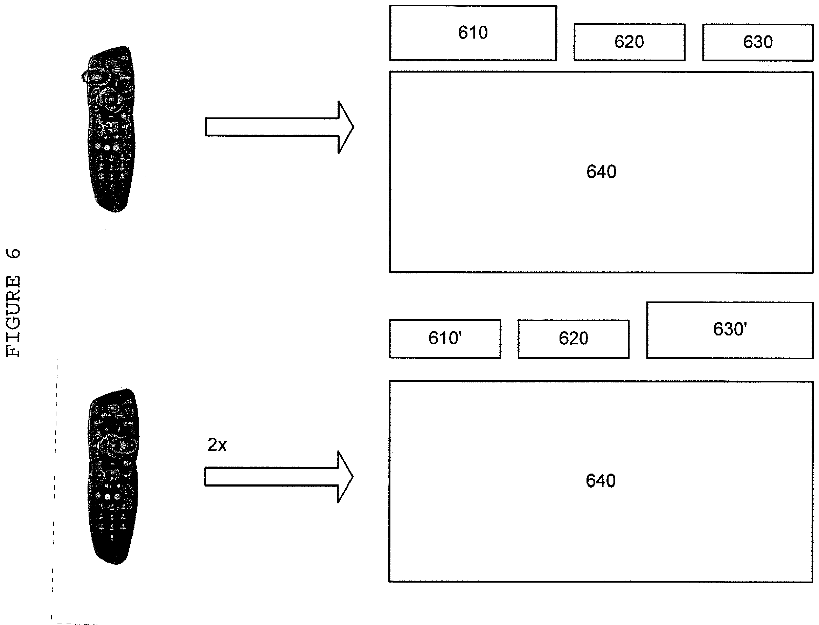

With reference to figure 6, an example will now be described of how pressing some buttons on the remote control of the receiver can correspond to different selections in an interactive menu and how pressing a button on the remote control does not necessarily correspond immediately to the choice of a program or television channel. For example, it is possible that pressing a button on the remote control selects different items in a menu associated with an interactive service. For example, the remote control may be preset so that pressing the menu button will call up the first of three possible items, see 610 in the upper part of figure 6. By pressing the up button twice one selects the third item, which corresponds to a list of content items to choose from. In the lower part of figure 6, it can be seen that the item 610 has become smaller (610'), whereas the new selected item 630' has become larger than the initial one (630).

Given that the device for collecting user interface status information replicates and collects the electrical signals corresponding to the user interface status, hence also of all the actions of pressing buttons on the remote control, this device can collect information about the user's navigation through menus such as the one illustrated here. Moreover, the device (according to all of the embodiments) can also collect information about the time spent by the user on different menu items (i.e. after each individual action of pressing a button on the remote control or the front panel), or, for example, the number of times buttons are pressed by the user before he or she makes a selection.

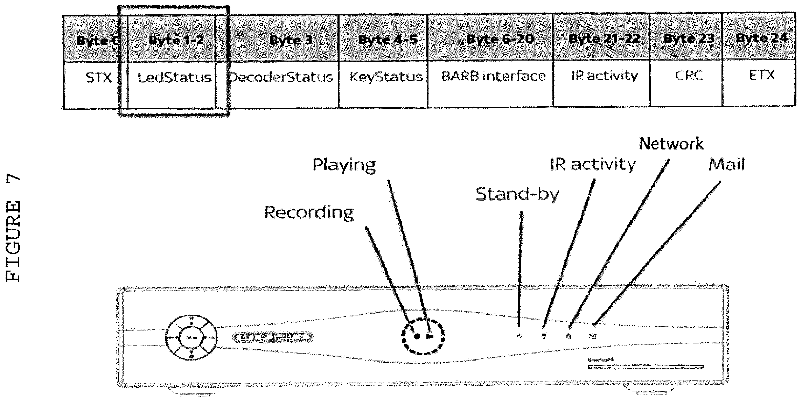

Figure 7 shows an example of a data packet which the information collecting device (according to any embodiment) can generate on the basis of the information collected. In this example the data packet is organized in 24 Bytes:
- the Byte 0 can contain information indicating the start of the packet (STX);
- the Bytes 1-2 refer to the status of the LEDs on the receiver (indicated by the terms Stand-by, IR activity, Network, Mail in the drawing below); therefore, these bits are an example of decoding of the replicated signal corresponding to the LEDs;
- the Byte 3 refers to the status of the decoder, obtained, for example, by already making an optional interpretation of the LEDs; for example, based on the LED indicating the connection to the satellite, DVB-T or Internet, it is possible to establish whether there is a channel or a connection;
- the Bytes 4-5 refer to the status of the buttons on the decoder, and thus represent an example of the bits obtained by decoding the replication of the electrical signal associated with these buttons;
- the Bytes 6-20 refer to the BARB interface, that is, they are an example of the operating status information detected by the software of the receiver, i.e. an example of a signal output by the processing means 200 which provides information about the operating status of the receiver;
- the Bytes 21-22 refer to the activity of the infrared sensor of the remote control, that is, they represent the bits of the button pressed, said bits being obtained by decoding the replicated electrical signals of the remote control;
- the Byte 23 refers to a CRC (Cyclic Redundancy Check);
- the Byte 24 indicates the end of the packet (ETX, End Of Text) .

The packet can further comprise a cryptographic public key should it be desired to encrypt the information sent or stored by means of a public/private-key cryptography system. The key can be entered into a further field (not shown in the figure) or entered into one of the pre-existing fields. Alternatively, the packet can be encrypted according to keys in the possession of the two communicating parts.

A receiver is represented in the lower part of figure 7. Some buttons for setting navigation functions can be seen on the left side of the drawing, whilst on the right side of the drawing some indicator lights give notifications and feedback to the user. The status of these buttons and LEDs is represented by the interface status collected by the collection means described above, which in the example of figure 7 is entered into a packet. The packet can be sent to a server, or stored in the information collecting device. It is to be noted that the packet can be modified so as to contain only one of the fields shown (with a number of bits different from the one shown) or any combination thereof.

In the above description, a replication means, collection means, filtering means, etc. have been described. These means can be replaced, however, by a replication unit, a collection unit, a filter and equivalents thereof, respectively.

Many of the embodiments and examples have been illustrated with reference to steps of methods or processes. However, what has been described can also be implemented in a program to be run on a processing entity (also distributed) or on an entity whose means are appropriately configured. The device can be implemented in a single apparatus, via HW/SW or a combination thereof, or in multiple interconnected units or apparatus (likewise HW, SW or a combination thereof).

The object of the present invention is achieved with the features of the claims.

## Claims

1. A device for collecting user interface status information of a radio and television program receiver, said device being **characterized in that** it comprises:
a replication means (400) configured to physically replicate by sniffing at least one electrical signal and obtain at least one physically replicated electrical signal (450), the at least one electrical signal being an electrical signal of the radio and television program receiver and carried by connection means (300) between a user interface means (300) and processing means (200) included in the radio and television program receiver;
a collection means (500) configured to collect user interface status information on the basis of said at least one physically replicated electrical signal, wherein said collection means (500) is further configured to obtain said user interface status information by decoding said at least one physically replicated electrical signal.

2. The device according to claim 1, wherein said collection means (500) is further configured to filter said user interface status information on the basis of at least one parameter.

3. The device according to one of the preceding claims, wherein the collection means (500) is configured to receive from the processing means (200) an operating status (250) corresponding to an operating status of the radio and television program receiver.

4. The device according to claims 2 and 3, wherein said at least one parameter comprises said at least one operating status.

5. The device according to claim 2 or 3 wherein said at least one parameter comprises an indication of correspondence between an ambient audio signal and a radio and television program signal received from said receiver.

6. The device according to one of the preceding claims, further comprising a communication means (700) for transmitting said collected user interface status information to a remote server (800).

7. A system comprising a radio and television program receiver and a device according to any one of the preceding claims.

8. A method for collecting user interface status information of a radio and television program receiver, said method being **characterized in that** it comprises the steps of:
physically replicating (S1) by sniffing at least one electrical signal and obtaining (S2) at least one physically replicated electrical signal (450), the at least one electrical signal being an electrical signal of the radio and television program receiver and carried by connection means (300) between a user interface means (300) and processing means (200) included in the radio and television program receiver;
collecting (S3) user interface status information on the basis of said at least one physically replicated electrical signal,
further comprising the step of obtaining said user interface status information by decoding said at least one physically replicated electrical signal.

9. The method according to claim 8, further comprising the step of filtering said user interface status information on the basis of at least one parameter.

10. The method according to any one of claims 8 to 9, further comprising the step of receiving from the processing means (200) an operating status corresponding to an operating status of the radio and television program receiver.

11. The method according to any of claims 8 to 10, wherein said at least one parameter comprises said at least one operating status.

12. The method according to claim 9 or 10, wherein said at least one parameter comprises an indication of correspondence between an ambient audio signal and a radio and television program signal received from said receiver.

13. The method according to any of claims 8 to 12, further comprising a step of transmitting said collected user interface status information to a remote server (800) .

## Patentansprüche

1. Vorrichtung zum Sammeln von Anwenderschnittstellenstatusinformationen eines Radio- und Fernsehprogrammempfängers, wobei die Vorrichtung **dadurch gekennzeichnet ist, dass** sie umfasst:
ein Replizierungsmittel (400), konfiguriert, um physisch zu replizieren, indem es mindestens ein elektrisches Signal aufgreift, und mindestens ein physisch repliziertes elektrisches Signal (450) zu erhalten, wobei das mindestens eine elektrische Signal ein elektrisches Signal des Radio- und Fernsehprogrammempfängers ist und von Verbindungsmittel (300) zwischen einem Anwenderschnittstellenmittel (300) und Verarbeitungsmittel (200), das in dem Radio- und Fernsehprogrammempfänger beinhaltet ist, getragen wird;
ein Sammelmittel (500), konfiguriert, um Anwenderschnittstellenstatusinformationen auf der Basis des mindestens einen physisch replizierten elektrischen Signals zu sammeln, wobei das Sammelmittel (500) weiter konfiguriert ist, die Anwenderschnittstellenstatusinformationen zu erhalten, indem es das mindestens eine physisch replizierte elektrische Signal decodiert.

2. Vorrichtung nach Anspruch 1, wobei das Sammelmittel (500) weiter konfiguriert ist, die Anwenderschnittstellenstatusinformationen auf der Basis mindestens eines Parameters zu filtern.

3. Vorrichtung nach einem der vorstehenden Ansprüche, wobei das Sammelmittel (500) konfiguriert ist, von dem Verarbeitungsmittel (200) einen Betriebsstatus (250) entsprechend einem Betriebsstatus des Radio- und Fernsehprogrammempfängers zu empfangen.

4. Vorrichtung nach Ansprüchen 2 und 3, wobei der mindestens eine Parameter den mindestens einen Betriebsstatus umfasst.

5. Vorrichtung nach Anspruch 2 oder 3, wobei der mindestens eine Parameter eine Übereinstimmungsangabe zwischen einem Umgebungstonsignal und einem Radio- und Fernsehprogrammsignal, das von dem Empfänger empfangen wird, umfasst.

6. Vorrichtung nach einem der vorstehenden Ansprüche, weiter umfassend ein Kommunikationsmittel (700) zum Übertragen der gesammelten Anwenderschnittstellenstatusinformationen an einen Fernserver (800).

7. System, umfassend einen Radio- und Fernsehprogrammempfänger und eine Vorrichtung nach einem der vorstehenden Ansprüche.

8. Verfahren zum Sammeln von Anwenderschnittstellenstatusinformationen eines Radio- und Fernsehprogrammempfängers, wobei das Verfahren **dadurch gekennzeichnet ist, dass** es die Schritte umfasst des:
physischen Replizierens (S1), indem mindestens ein elektrisches Signal aufgegriffen wird, und Erhaltens (S2) mindestens eines physisch replizierten elektrischen Signals (450), wobei das mindestens eine elektrische Signal ein elektrisches Signal des Radio- und Fernsehprogrammempfängers ist und von Verbindungsmittel (300) zwischen einem Anwenderschnittstellenmittel (300) und Verarbeitungsmittel (200), die in dem Radio- und Fernsehprogrammempfänger beinhaltet sind, getragen wird;
Sammelns (S3) von Anwenderschnittstellenstatusinformationen auf der Basis des mindestens einen physisch replizierten elektrischen Signals,
weiter umfassend den Schritt des Erhaltens der Anwenderschnittstellenstatusinformationen, indem das mindestens eine physisch replizierte elektrische Signal decodiert wird.

9. Verfahren nach Anspruch 8, weiter umfassend den Schritt des Filterns der Anwenderschnittstellenstatusinformationen auf der Basis mindestens eines Parameters.

10. Verfahren nach einem von Ansprüchen 8 bis 9, weiter umfassend den Schritt des Empfangens eines Betriebsstatus entsprechend einem Betriebsstatus des Radio- und Fernsehprogrammempfängers von dem Verarbeitungsmittel (200).

11. Verfahren nach einem der Ansprüche 8 bis 10, wobei der mindestens eine Parameter den mindestens einen Betriebsstatus umfasst.

12. Verfahren nach Anspruch 9 oder 10, wobei der mindestens eine Parameter eine Übereinstimmungsangabe zwischen einem Umgebungstonsignal und einem Radio- und Fernsehprogrammsignal, das von dem Empfänger empfangen wird, umfasst.

13. Verfahren nach einem von Ansprüchen 8 bis 12, weiter umfassend einen Schritt des Übertragens der gesammelten Anwenderschnittstellenstatusinformationen an einen Fernserver (800).

## Revendications

1. Dispositif destiné à collecter des informations d'état d'interface utilisateur d'un récepteur de programme de radio et de télévision, ledit dispositif étant **caractérisé en ce qu'**il comprend :
un moyen de reproduction (400) conçu pour reproduire physiquement par reniflage au moins un signal électrique et obtenir au moins un signal électrique reproduit physiquement (450), l'au moins un signal électrique étant un signal électrique du récepteur de programme de radio et de télévision et porté par des moyens de connexion (300) entre un moyen d'interface utilisateur (300) et des moyens de traitement (200) inclus dans le récepteur de programme de radio et de télévision ;
un moyen de collecte (500) conçu pour collecter des informations d'état d'interface utilisateur sur la base dudit au moins un signal électrique reproduit physiquement, dans lequel ledit moyen de collecte (500) est en outre conçu pour obtenir lesdites informations d'état d'interface utilisateur en décodant ledit au moins un signal électrique reproduit physiquement.

2. Dispositif selon la revendication 1, dans lequel ledit moyen de collecte (500) est en outre conçu pour filtrer lesdites informations d'état d'interface utilisateur sur la base d'au moins un paramètre.

3. Dispositif selon l'une des revendications précédentes, dans lequel le moyen de collecte (500) est conçu pour recevoir à partir des moyens de traitement (200) un état opérationnel (250) correspondant à un état opérationnel du récepteur de programme de radio et de télévision.

4. Dispositif selon les revendications 2 et 3, dans lequel ledit au moins un paramètre comprend ledit au moins un état opérationnel.

5. Dispositif selon la revendication 2 ou 3, dans lequel ledit au moins un paramètre comprend une indication de correspondance entre un signal audio ambiant et un signal de programme de radio et de télévision reçue à partir dudit récepteur.

6. Dispositif selon l'une des revendications précédentes, comprenant en outre un moyen de communication (700) pour transmettre lesdites informations d'état d'interface utilisateur collectées à un serveur distant (800).

7. Système comprenant un récepteur de programme de radio et de télévision et un dispositif selon l'une quelconque des revendications précédentes.

8. Procédé destiné à collecter des informations d'état d'interface utilisateur d'un récepteur de programme de radio et de télévision, ledit procédé étant **caractérisé en ce qu'**il comprend les étapes de :
reproduction physique (S1) par reniflage d'au moins un signal électrique et obtention (S2) d'au moins un signal électrique reproduit physiquement (450), l'au moins un signal électrique étant un signal électrique du récepteur de programme de radio et de télévision et porté par des moyens de connexion (300) entre un moyen d'interface utilisateur (300) et des moyens de traitement (200) inclus dans le récepteur de programme de radio et de télévision ;
collecte (S3) d'informations d'état d'interface utilisateur sur la base dudit au moins un signal électrique reproduit physiquement,
comprenant en outre l'étape d'obtention desdites informations d'état d'interface utilisateur par décodage dudit au moins un signal électrique reproduit physiquement.

9. Procédé selon la revendication 8, comprenant en outre l'étape de filtrage desdites informations d'état d'interface utilisateur sur la base d'au moins un paramètre.

10. Procédé selon l'une quelconque des revendications 8 à 9, comprenant en outre l'étape de réception à partir des moyens de traitement (200) d'un état opérationnel correspondant à un état opérationnel du récepteur de programme de radio et de télévision.

11. Procédé selon l'une quelconque des revendications 8 à 10, dans lequel ledit au moins un paramètre comprend ledit au moins un état opérationnel.

12. Procédé selon la revendication 9 ou 10, dans lequel ledit au moins un paramètre comprend une indication de correspondance entre un signal audio ambiant et un signal de programme de radio et de télévision reçue à partir dudit récepteur.

13. Procédé selon l'une quelconque des revendications 8 à 12, comprenant en outre une étape de transmission desdites informations d'état d'interface utilisateur collectées à un serveur distant (800).
